# EUROPÄISCHE PATENTSCHRIFT

(11) **EP 2 895 310 B1**
(45) Veröffentlichungstag und Bekanntmachung des Hinweises auf die Patenterteilung: **19.12.2018**
(21) Anmeldenummer: 13756326.8
(22) Anmeldetag: 03.09.2013
(51) Int. Cl.: B29C 45/14, B29C 33/42, D21F 1/44, B29C 45/00

(54) **SPRITZGUSSWERKZEUG UND ENTSPRECHENDER SPRITZGUSSPROZESS ZUR ERZEUGUNG EINES WASSERZEICHENEINSATZES IN EINEM ENTWÄSSERUNGSSIEB**
INJECTION MOULD AND INJECTION MOULDING PROCESS FOR CREATING A WATER MARK CREATING INSERT IN A DRAINAGE SIEVE
MOULE DE MOULAGE PAR INJECTION ET PROCÉDÉ DE MOULAGE PAR INJECTION POUR LA FABRICATION D'UNE GARNITURE DE FILIGRANE DANS UN TAMIS DE DRAINER

(30) Priorität: 13.09.2012 DE 102012018166
(43) Veröffentlichungstag der Anmeldung: 22.07.2015
(73) Patentinhaber: Giesecke+Devrient Currency Technology GmbH, 81677 München (DE)
(72) Erfinder: KIEFERSAUER, Georg, 83661 Lenggries (DE); GREGAREK, André, 81671 München (DE); HÄNELT, Andreas, 83730 Fischbachau (DE); WIEDNER, Bernhard, 83714 Miesbach (DE); AIGNER, Andreas, 83626 Valley (DE); WILD, Günther, 83734 Hausham (DE)
(74) Vertreter: Zeuner, Stefan
(86) Internationale Anmeldenummer: PCT/EP2013/002644
(87) Internationale Veröffentlichungsnummer: WO 2014/040706

(56) Entgegenhaltungen:
- EP-A1- 1 358 992
- DE-A1-102006 058 513
- DE-A1-102011 116 605

## Beschreibung

Die Erfindung betrifft ein Spritzgusswerkzeug zur Erzeugung eines Wasserzeicheneinsatzes in einem Entwässerungssieb sowie eine Vorrichtung und ein Verfahren zum Ausstatten eines Entwässerungssiebs mit einem Wasserzeicheneinsatz unter Verwendung eines derartigen Spritzgusswerkzeugs.

Bei der Papierherstellung auf Rundsiebmaschinen oder Langsiebmaschinen lagert sich Papiermasse kontinuierlich auf einem bewegten Entwässerungssieb an und wird soweit verfestigt, dass sie als feuchte Papierbahn zur Weiterbearbeitung vom Entwässerungssieb abgezogen werden kann. Vor allem Sicherheitspapiere für Banknoten, Ausweisdokumente und dergleichen werden zur Absicherung oft mit Wasserzeichen ausgestattet, die eine Überprüfung der Echtheit des Sicherheitspapiers gestatten und die zugleich als Schutz vor unerlaubter Reproduktion dienen. Die DE 10 2006 058 513 beschreibt entweder herkömmliche Siebprägungen ohne Wasserzeicheneinsatz oder eine konkrete Ausgestaltung eines Wasserzeicheneinsatzes und damit das Wasserzeichenrelief, nicht jedoch das daran angrenzende Siebprägerelief.

Wasserzeichenpapier kann sowohl mit zweistufigen Wasserzeichen mit einem starken Hell-Dunkel-Effekt als auch mit mehrstufigen Wasserzeichen mit weichen Übergängen zwischen Hell und Dunkel und detailreicher Darstellung eines Motivs ausgestattet werden. Für die Herstellung mehrstufiger Wasserzeichen wird herkömmlich in ein Entwässerungssieb aus Metall ein gewünschtes dreidimensionales Relief geprägt. Die Papierdicke des fertigen Papiers variiert dann entsprechend dem geprägten Relief und lässt im Durchlicht weiche, graduelle Übergänge zwischen helleren und dunkleren Bereichen erkennen.

Ausgehend davon liegt der Erfindung die Aufgabe zugrunde, ein Entwässerungssieb zu schaffen, das die Herstellung von Papier mit mehrstufigen Wasserzeichen hoher Detailgenauigkeit ermöglicht und möglichst auch auf Langsieb- oder Schrägsiebpapiermaschinen eingesetzt werden kann. Die Erfindung soll insbesondere geeignete Vorrichtungen und Verfahren zur Herstellung solcher Entwässerungssiebe bereitstellen, die idealerweise auch den steigenden Maschinengeschwindigkeiten bei der Erzeugung von Wasserzeichenpapieren Rechnung tragen, so dass die Qualität der Wasserzeichen trotz erhöhter Maschinengeschwindigkeit beibehalten oder sogar erhöht wird.

Diese Aufgabe wird durch die Merkmale der unabhängigen Ansprüche gelöst. Weiterbildungen der Erfindung sind Gegenstand der Unteransprüche.

Die Erfindung enthält ein Spritzgusswerkzeug zur Erzeugung eines Wasserzeicheneinsatzes mit einem mehrstufigen Spritzgussrelief in einem mit einer Aussparung versehenen Entwässerungssieb, mit
- einem Düsenwerkzeug, das als Spritzgusswerkzeugoberteil dient, und
- einem Reliefwerkzeug, das als Spritzgusswerkzeugunterteil dient, wobei
- das Spritzgusswerkzeug eine Spritzgusskavität aufweist, die durch eine an der Unterseite des Düsenwerkzeugs angeordnete Düsenwerkzeugkavität und/oder eine an der Oberseite des Reliefwerkzeugs angeordnete Reliefwerkzeugkavität erzeugt wird,
- das Düsenwerkzeug an seiner Oberseite eine Düsenöffnung zum Einspritzen von Kunststoff in die Spritzgusskavität aufweist,
- das Reliefwerkzeug an seiner Oberseite mit einem mehrstufigen Wasserzeichenrelief in Form des invertierten Spritzgussreliefs versehen ist, und
- das Düsenwerkzeug und das Reliefwerkzeug als Spritzgusswerkzeugoberteil bzw. Spritzgusswerkzeugunterteil das Entwässerungssieb im Bereich der Aussparung zwischen sich aufnehmen und dabei die Spritzgusskavität erzeugen, welche die Düsenwerkzeugkavität und/oder die Reliefwerkzeugkavität und die Aussparung des Entwässerungssiebs enthält und an ihrer Unterseite von dem Wasserzeichenrelief des Reliefwerkzeugs begrenzt ist, so dass beim Einspritzen von Kunststoff in die Spritzgusskavität ein direkt in das Entwässerungssieb eingespritzter Wasserzeicheneinsatz mit dem gewünschten Spritzgussrelief entsteht, wobei das Reliefwerkzeug an seiner Oberseite angrenzend an das Wasserzeichenrelief ein Siebprägerelief und das Düsenwerkzeug an seiner Unterseite gegebenenfalls angrenzend an die Düsenwerkzeugkavität, ein korrespondierendes invertiertes Siebprägerelief aufweist, so dass die Siebprägereliefs von Düsenwerkzeug und Reliefwerkzeug das Entwässerungssieb angrenzend an den Wasserzeicheneinsatz mit einem Prägebereich versehen.

Unter dem Begriff "mehrstufig" ist im Sinne der Erfindung auch "zweistufig" zu verstehen. Vorteilhafterweise ist unter dem Begriff "mehrstufig" mehr als zweistufig zu verstehen. Dies gilt für sämtliche Ausführungen der vorliegenden Erfindung.

Das mit einer Aussparung versehene Entwässerungssieb kann selbstverständlich über das gesamte Sieb betrachtet mehrere Aussparungen enthalten. Üblicherweise wird die Anzahl der Aussparungen dem Nutzen der zu erzeugenden Endprodukte, z.B. Banknoten, entsprechen.

Weiter versteht sich, dass mit einem Spritzgusswerkzeug auch mehrere Wasserzeicheneinsätze und auch Wasserzeicheneinsätze mit mehreren Spritzgussreliefs erzeugt werden können.

Die Aussparung des Entwässerungssiebs muss nicht auf die oberste Sieblage beschränkt sein. Der eingespritzte Wasserzeicheneinsatz kann auch in einer tieferen Sieblage eines mehrlagigen Siebs erzeugt werden, wozu diese tiefere und die darüberliegenden Sieblagen ausgespart werden. Die Aussparungen dieser Sieblagen bilden dann zusammen die Aussparung des Entwässerungssiebs.

Die Spritzgusskavität des Spritzgusswerkzeugs kann erfindungsgemäß durch zwei Kavitäten erzeugt werden, nämlich durch eine an der Unterseite des Düsenwerkzeugs angeordnete Düsenwerkzeugkavität und eine an der Oberseite des Reliefwerkzeugs angeordnete Reliefwerkzeugkavität. Alternativ kann die Spritzgusskavität auch nur durch eine Kavität erzeugt werden, nämlich entweder eine Düsenwerkzeugkavität, ohne dass das Reliefwerkzeug eine entsprechende Reliefwerkzeugkavität aufweist, oder durch eine Reliefwerkzeugkavität, ohne dass das Düsenwerkzeug eine entsprechende Düsenwerkzeugkavität aufweist. Enthält das Reliefwerkzeug eine Reliefwerkzeugkavität, so liegt das mehrstufige Wasserzeichenrelief in Form des invertierten Spritzgussreliefs in der Regel innerhalb der Reliefwerkzeugkavität.

Weist das Düsenwerkzeug eine Düsenwerkzeugkavität auf, so ist das korrespondierende invertierte Siebprägerelief mit Vorteil angrenzend an die Düsenwerkzeugkavität vorgesehen. Das Wasserzeichenrelief und die Siebprägereliefs bilden dabei mit Vorteil ein erstes bzw. zweites Motiv, wobei das erste und zweite Motiv insbesondere aufeinander bezogene oder einander ergänzende Informationen darstellen.

Alternativ können der an das Wasserzeichenrelief angrenzende Bereich der Oberseite des Reliefwerkzeugs und die Unterseite bzw. der an die Düsenwerkzeugkavität angrenzende Bereich der Unterseite des Düsenwerkzeugs auch ohne Reliefstruktur ausgebildet sein. In diesem Fall wird im Bereich der Aussparung nur ein Wasserzeicheneinsatz erzeugt ohne dass der angrenzende Bereich zusätzlich geprägt wird.

In allen Gestaltungen kann das Spritzgusswerkzeug mit Vorteil eine umlaufende Dichtkante zum Abdichten der Spritzgusskavität aufweisen.

Die Erfindung betrifft weiter eine Vorrichtung zum Ausstatten eines Entwässerungssiebs mit einem Wasserzeicheneinsatz, der ein mehrstufiges Spritzgussrelief trägt, umfassend
- eine Siebbearbeitungsfläche zur Aufnahme eines Entwässerungssiebs,
- eine Laservorrichtung zur Erzeugung von Aussparungen in dem Entwässerungssieb,
- ein Spritzgusswerkzeug der oben beschriebenen Art zur Erzeugung eines Wasserzeicheneinsatzes mit einem mehrstufigen Spritzgussrelief in den mit Aussparungen versehenen Bereichen des Entwässerungssiebs, und
- eine Laservorrichtung zur Erzeugung von Entwässerungs-Perforationen in dem Wasserzeicheneinsatz.

In einer vorteilhaften Erfindungsvariante umfasst die Laservorrichtung zur Erzeugung von Aussparungen in dem Entwässerungssieb einen Nd:YAG-Laser, und die Laservorrichtung zur Erzeugung von Entwässerungs-Perforationen in dem Wasserzeicheneinsatz umfasst einen CO₂ -Laser. Eine derartige Vorrichtung eignet sich insbesondere zur Bearbeitung von Sieben mit einem Metallgewebe, wie etwa Bronzesiebe, oder von Sieben mit einem Metall-Kunststoff-Mischgewebe.

Bei einer anderen, ebenfalls vorteilhaften Erfindungsvariante enthält die Vorrichtung eine Laservorrichtung mit einem CO₂-Laser, die sowohl der Erzeugung von Aussparungen in dem Entwässerungssieb als auch der Erzeugung von Entwässerungs-Perforationen in dem Wasserzeicheneinsatz dient. Eine derartige Vorrichtung eignet sich insbesondere zur Bearbeitung von Sieben mit reinen Kunststoffgeweben.

Die Erfindung enthält schließlich auch ein Verfahren zum Ausstatten eines Entwässerungssiebs mit einem Wasserzeicheneinsatz, der ein mehrstufiges Spritzgussrelief trägt, bei dem
- ein Entwässerungssieb bereitgestellt und auf einer Siebbearbeitungsfläche aufgenommen wird,
- durch Einwirkung von Laserstrahlung Aussparungen in dem Entwässerungssieb erzeugt werden,
- mittels eines Spritzgusswerkzeugs der oben beschriebenen Art ein Wasserzeicheneinsatz mit einem mehrstufigen Spritzgussrelief in den mit Aussparungen versehenen Bereichen des Entwässerungssiebs erzeugt wird, und
- durch Einwirkung von Laserstrahlung Entwässerungs-Perforationen in dem Wasserzeicheneinsatz erzeugt werden.

Mit Vorteil werden durch die Laserstrahlung Aussparungen in dem Entwässerungssieb erzeugt, die 0,05 mm bis 1,5 mm kleiner, vorzugsweise 0,1 mm bis 0,8 mm kleiner als der zu erzeugende Wasserzeicheneinsatz sind.

In einer vorteilhaften Erfindungsvariante wird ein Entwässerungssieb mit einem Siebgewebe aus Metall, insbesondere aus Bronze, bereitgestellt, und die Aussparungen in dem Entwässerungssieb werden durch Einwirkung von Laserstrahlung im nahen Infrarot, vorzugsweise bei einer Wellenlänge von 800 nm bis 1500 nm, besonders bevorzugt durch Einwirkung der Laserstrahlung eines Nd:YAG-Lasers erzeugt.

Bei einer anderen, ebenfalls vorteilhaften Erfindungsvariante wird ein Entwässerungssieb mit einem Siebgewebe aus Kunststoff bereitgestellt, und die Aussparungen in dem Entwässerungssieb werden durch Einwirkung von Laserstrahlung im mittleren Infrarot, vorzugsweise bei einer Wellenlänge von 5 µm bis 20 µm, besonders bevorzugt durch Einwirkung der Laserstrahlung eines CO₂-Lasers erzeugt.

Im Fall eines bereitgestellten Metallsiebs kann mittels eines Spritzgusswerkzeugs der oben beschriebenen Art, welches Siebprägereliefs im Relief- und Düsenwerkzeug aufweist, sowohl ein Wasserzeicheneinsatz mit einem mehrstufigen Spritzgussrelief in den mit Aussparungen versehenen Bereichen des Entwässerungssiebs als auch ein an den Wasserzeicheneinsatz angrenzender Prägebereich erzeugt werden.

Sowohl bei Sieben mit einem Metallgewebe als auch bei Sieben mit einem Kunststoffgewebe können mittels eines Spritzgusswerkzeugs der oben beschriebenen Art, welches keine Siebprägereliefs im Relief- und Düsenwerkzeug aufweist, ein Wasserzeicheneinsatz mit einem mehrstufigen Spritzgussrelief in den mit Aussparungen versehenen Bereichen des Entwässerungssiebs erzeugt werden, wobei der an den Wasserzeicheneinsatz angrenzende Bereich unverprägt bleibt.

In allen Verfahrensvarianten werden die Entwässerungs-Perforationen in dem Wasserzeicheneinsatz mit Vorteil durch Einwirkung von Laserstrahlung im mittleren Infrarot, vorzugsweise bei einer Wellenlänge von 5 µm bis 20 µm, besonders bevorzugt durch Einwirkung der Laserstrahlung eines CO₂-Lasers erzeugt.

Wie oben bereits erwähnt, können mit einem Spritzgusswerkzeug auch mehrere Wasserzeicheneinsätze und auch Wasserzeicheneinsätze mit mehreren Spritzgussreliefs erzeugt werden. Auch können Aussparungen des Entwässerungssiebs erzeugt werden, die sich durch mehrere Sieblagen erstrecken, so dass der Wasserzeicheneinsatz in einer tieferen Sieblage eines mehrlagigen Siebs erzeugt wird.

In allen Ausführungsformen, insbesondere in Ausführungsformen ohne Siebprägereliefs, ist der Umriss des Wasserzeicheneinsatzes deckungsgleich mit dem Motivumriss. In diesem Fall reicht das Motiv bis an die Kante des Wasserzeicheneinsatzes. Beispielsweise wird der Umriss eines Portraits als Umriss des Wasserzeicheneinsatzes nachgebildet. Dies ist selbstverständlich mit jedem Motiv machbar. Der Umriss eines Motives kann dabei in seiner Gesamtheit oder alternativ auch nur in Teilen mit dem Umriss des Wasserzeicheneinsatzes zusammenfallen. Dies hat den Vorteil, dass im fertigen Produkt der Übergang zwischen Wassereinsatz und Sieb einem Betrachter wenig bis nicht auffällt.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine Aufsicht auf ein erfindungsgemäß hergestelltes Entwässerungssieb für die Herstellung von Papier mit mehrstufigen Wasserzeichen,
- Fig. 2: einen Querschnitt des Entwässerungssiebs entlang der der Linie II-II von Fig. 1,
- Fig. 3: den Detailausschnitt III von Fig. 2,
- Fig. 4: schematisch eine erfindungsgemäße Vorrichtung zum Ausstatten eines Entwässerungssiebs mit Wasserzeicheneinsätzen, die ein mehrstufiges Spritzgussrelief tragen,
- Fig. 5: in (a) bis (d) Zwischenschritte bei der erfindungsgemäßen Ausstattung eines Entwässerungssiebs mit einem perforierten, spritzgegossenen Wasserzeicheneinsatz,
- Fig. 6: in (a) und (b) ein Spritzgusswerkzeug nach einem Ausführungsbeispiel der Erfindung,
- Fig. 7: ein Spritzgusswerkzeug nach einem weiteren Ausführungsbeispiel der Erfindung, und
- Fig. 8: ein Entwässerungssieb, das unter Verwendung des Spritzgusswerkzeugs von Fig. 7 mit einem Wasserzeicheneinsatz ausgestattet wurde,

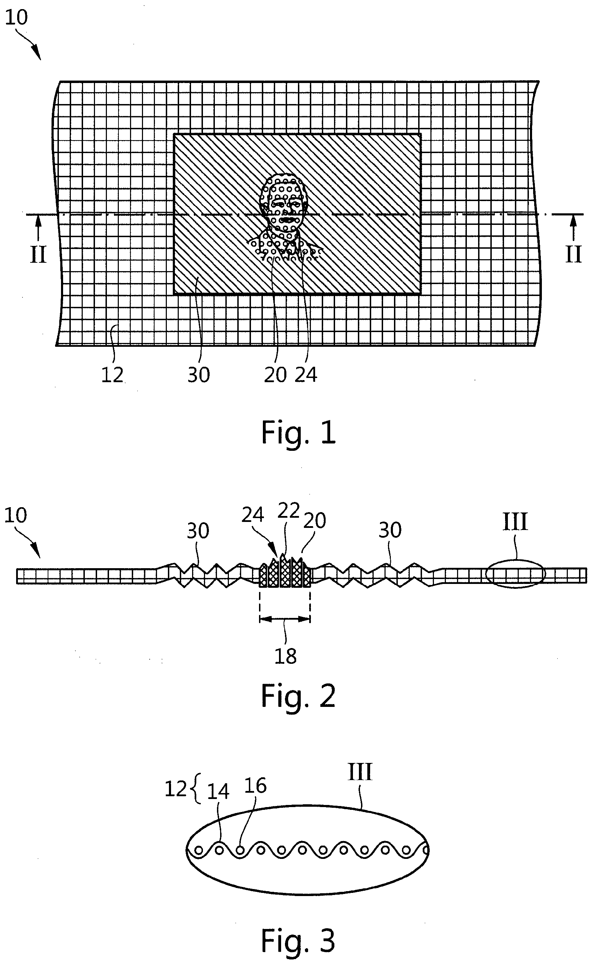

Die Erfindung wird nun am Beispiel von Entwässerungssieben für die Herstellung von Papier mit mehrstufigen Wasserzeichen erläutert. Figuren 1 bis 3 zeigen zunächst schematisch ein Bronze-Entwässerungssieb 10 für die Herstellung von Banknotenpapier, wobei Fig. 1 das Entwässerungssieb 10 in Aufsicht und Fig. 2 einen Querschnitt entlang der der Linie II-II von Fig. 1 darstellt. Fig. 3 zeigt den Detailausschnitt III des Siebgewebes des Entwässerungssiebs 10.

Mit Bezug zunächst auf Fig. 3 enthält das Siebgewebe 12 des Entwässerungssiebs 10 zumindest ein System von miteinander verwobenen, in Längsrichtung verlaufenden Kettfäden 14 und quer dazu verlaufenden Schussfäden 16. Im Ausführungsbeispiel der Figuren 1 bis 3 ist das Siebgewebe 12 ein Metallgewebe, nämlich ein Bronzegewebe. In anderen Gestaltungen kann das Siebgewebe auch ein Metall-Kunststoff-Mischgewebe, insbesondere ein Bronze- Kunststoff-Mischgewebe oder auch ein reines Kunststoffgewebe sein, wie weiter unten genauer erläutert. In allen Gestaltungen kann das Siebgewebe einlagig oder mehrlagig sein, wobei der einfacheren Darstellung halber in den Figuren jeweils nur ein einlagiges Siebgewebe gezeigt ist.

Mit Bezug auf Figuren 1 und 2 enthält das Entwässerungssieb 10 einen spritzgegossenen Wasserzeicheneinsatz 20, der im Bereich einer Aussparung 18 des Entwässerungssiebs direkt in das Siebgewebe eingespritzt ist. Der Wasserzeicheneinsatz 20 weist dabei ein mehrstufiges Spritzgussrelief 22 auf, das eine sehr detailreiche Darstellung graphischer Motive, wie etwa des in Fig. 1 gezeigten Portraits, erlaubt. Um die Entwässerung bei der Papierherstellung auch im Bereich des Wasserzeicheneinsatzes 20 sicherzustellen, ist dieser mit einer Mehrzahl von Perforationen 24 versehen. Der Durchmesser der Perforationen 24 ist dabei so klein gewählt, dass in ihnen bei der Papierherstellung keine Fasern anhaften. Typische Perforationsdurchmesser liegen zwischen 50 µm und einigen 100 µm, beispielsweise bei etwa 500 µm. Schließlich enthält das Entwässerungssieb 10 einen den Wasserzeicheneinsatz 20 passergenau umgebenden Prägebereich 30, in dem das Siebgewebe 12 mit einer Prägung versehen ist. Technisch besonders anspruchsvoll gestalten sich Ausführungsformen, bei denen der Prägebereich passergenau von einem Wasserzeicheneinsatz umgeben ist. Sowohl der Prägebereich 30 als auch der Wasserzeicheneinsatz 20 erzeugen bei der Papierherstellung Wasserzeichen im Papier. Durch die weiter unten beschriebene gemeinsame und gleichzeitige Herstellung weisen die Positionen von Prägebereich 30 und Wasserzeicheneinsatz 20 zueinander keinerlei Passertoleranzen auf. Typischerweise erzeugt der Wasserzeicheneinsatz 20 ein Wasserzeichen in Form eines ersten Motivs und der Prägebereich 30 ein Wasserzeichen in Form eines dazu gepasserten zweiten Motivs, wobei das erste und zweite Motiv vorteilhaft aufeinander bezogene oder einander ergänzende Informationen darstellen.

Mittels der beiden unterschiedliche Wasserzeichen erzeugenden Elemente Prägebereich und Wasserzeicheneinsatz lassen sich unterschiedliche Schärfe und Detailreichtum erzeugen. Insbesondere mit dem Wasserzeicheneinsatz ist es im Vergleich zum Prägebereich möglich, Motive besonders detailreich darzustellen und eine sehr große Tiefenschärfe zu erzielen. Dies kann beispielsweise genutzt werden, um Vorder- und Hintergrund eines Motivs mit unterschiedlicher Tiefenschärfe auszugestalten.

Die Kombination eines Prägebereichs und eines Wasserzeicheneinsatzes zur Erzeugung eines Motivs ermöglicht daher eine vollkommen neuartige Möglichkeit zur Ausgestaltung und Darstellung des Motivs.

Zudem ist die Kombination von Prägebereich und Wasserzeicheneinsatz innerhalb eines Siebes technisch sehr anspruchsvoll in der Umsetzung, so dass eine Nachahmung und damit Fälschung derartig erzeugter Wasserzeichen extrem erschwert ist.

Erfindungsgemäß werden die Bearbeitungsschritte zum Ausstatten eines Siebgewebes mit dem Wasserzeicheneinsatz 20 und der Prägung 30 auf einer einzigen Anlage durchgeführt. Das bearbeitete Sieb bleibt dabei vorzugsweise ortsfest oder wird nur in einer Raumrichtung verfahren. Die jeweiligen Bearbeitungseinrichtungen werden dann in einer oder zwei Raumrichtungen über dem Siebgewebe verfahren.

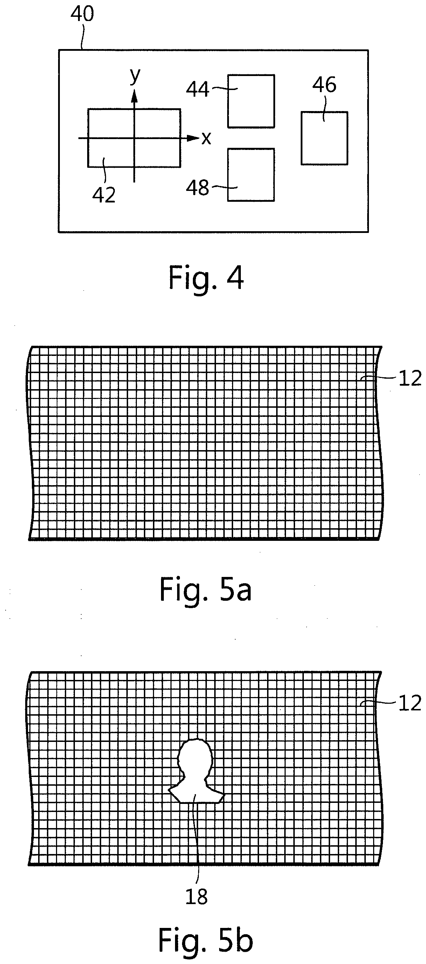

Fig. 4 zeigt schematisch eine derartige Anlage bzw. Vorrichtung 40 zum Ausstatten eines Entwässerungssiebs mit Wasserzeicheneinsätzen 20, die ein mehrstufiges Spritzgussrelief 22 tragen.

Die Vorrichtung 40 enthält eine Siebbearbeitungsfläche 42 zur Aufnahme des zu bearbeitenden Entwässerungssiebs 10, eine erste Laservorrichtung 44 in Form eines Nd:YAG-Laserschneiders zur Erzeugung von Ausnehmungen 18 in dem Entwässerungssieb 10, ein nachfolgend genauer beschriebenes Spritzgusswerkzeug 46 zur Erzeugung von Wasserzeicheneinsätzen 20 mit einem mehrstufigen Spritzgussrelief 22 in den mit Aussparungen 18 versehenen Bereichen des Entwässerungssiebs 10, und eine zweite Laservorrichtung 48 in Form eines CO₂-Lasers zur Erzeugung der Entwässerungs-Perforationen 24 in dem Wasserzeicheneinsatz 20.

Die erste Laservorrichtung 44, das Spritzgusswerkzeug 46 und die zweite Laservorrichtung 48 können beispielsweise über ein Portal in x- und γ-Richtung über der Siebbearbeitungsfläche 42 verfahren werden, in der das Entwässerungssieb 10 bei der Bearbeitung ortsfest eingespannt ist. Vorzugsweise kann das Entwässerungssieb 10 auch in einer Transportrichtung, beispielsweise der x-Richtung, über der Siebbearbeitungsfläche verfahren werden, während die Bearbeitungseinrichtungen auf einem Schlitten entlang eines die Siebbearbeitungsfläche über- bzw. untergreifenden Querholms in γ-Richtung verfahren werden.

Zur Herstellung des in Fig. 1 gezeigten Entwässerungssiebs 10 wird zunächst ein Siebgewebe 12 bereitgestellt und auf der Siebbearbeitungsfläche 42 der Vorrichtung 40 aufgenommen, wie in Fig. 5(a) schematisch dargestellt. Dann wird die Laservorrichtung 44 an die Stellen des Siebgewebes 12 verfahren, an denen Wasserzeicheneinsätze 20 vorgesehen sind. Durch die Einwirkung der Laserstrahlung des Nd:YAG-Lasers werden an diesen Stellen Aussparungen 18 erzeugt, die etwas kleiner, beispielsweise 1/10 mm kleiner als die gewünschte Form des Wasserzeicheneinsatzes sind. Fig. 5(b) zeigt das Entwässerungssieb 10 nach dem ersten Bearbeitungsschritt des Ausschneidens der Aussparungen 18 aus dem Siebgewebe 12.

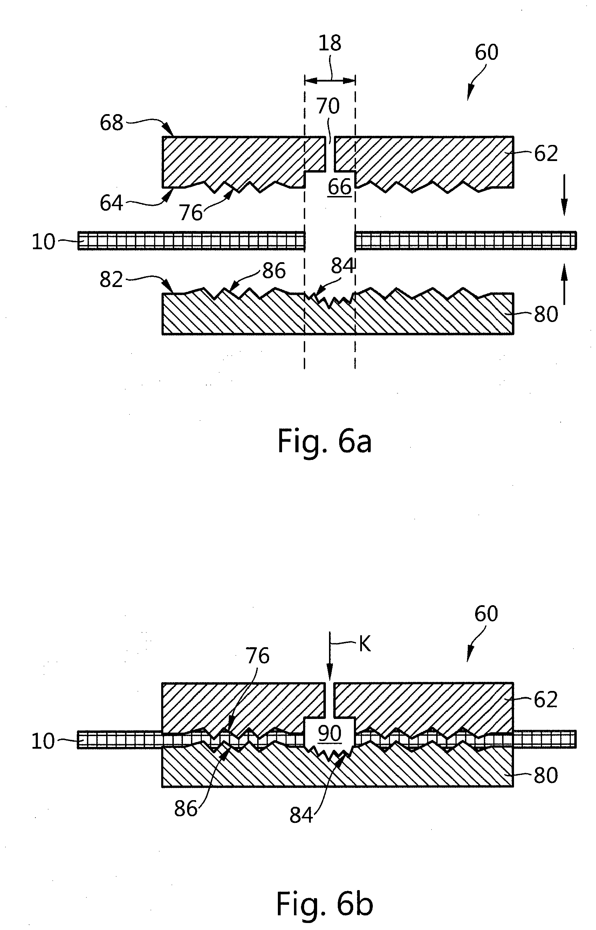

Um nun gleichzeitig das Siebgewebe prägen und einen Wasserzeicheneinsatz 20 direkt in das Siebgewebe einspritzen zu können, kommt erfindungsgemäß ein besonderes Spritzgusswerkzeug 60 zum Einsatz, das mit Bezug auf die Figuren 6(a) und (b) näher beschrieben wird.

Das Spritzgusswerkzeug 60 enthält ein Düsenwerkzeug 62, das als Spritzgusswerkzeugoberteil dient, und ein Reliefwerkzeug 80, das als Spritzgusswerkzeugunterteil dient. Das Düsenwerkzeug 62 ist in Form einer flachen Platte mit einer Ober- und einer Unterseite ausgebildet. An seiner Unterseite 64 ist in dem Düsenwerkzeug 62 eine Düsenwerkzeugkavität 66 ausgebildet, die mit einer an der Oberseite 68 des Düsenwerkzeugs 62 angeordneten Düsenöffnung 70 zum Einspritzen von Kunststoff in die Düsenwerkzeugkavität 66 verbunden ist.

Das Reliefwerkzeug 80 ist ebenfalls in Form einer flachen Platte mit einer Ober- und einer Unterseite ausgebildet. An seiner Oberseite 82 ist das Reliefwerkzeug 80 mit einem mehrstufigen Wasserzeichenrelief 84 in Form des invertierten Spritzgussreliefs 22 versehen.

Angrenzend an das Wasserzeichenrelief 84 ist auf der Oberseite 82 des Reliefwerkzeugs 80 ein Siebprägerelief 86 vorgesehen. Das Düsenwerkzeug 62 weist an seiner Unterseite 64, angrenzend an die Düsenwerkzeugkavität 66 ein korrespondierendes invertiertes Siebprägerelief 76 auf.

Nach dem Ausschneiden der Aussparung 18 wird nun ein Spritzgusswerkzeug 60 der beschriebenen Art mit Düsenwerkzeug 62 und Reliefwerkzeug 80 an ausgesparten Stellen des Entwässerungssiebs 10 verfahren, so dass das Düsenwerkzeug 62 oberhalb und das Reliefwerkzeug 80 deckungsgleich unterhalb der Aussparung 18 angeordnet ist. Dann werden die beiden Werkzeuge 62, 80 in vertikaler Richtung (Pfeile am rechten Bildrand) zusammengeführt, so dass sie das Entwässerungssieb 10 im Bereich der Aussparung 18 mit einem vorgegebenen Pressdruck zwischen sich aufnehmen.

Wie in Fig. 6(b) gezeigt, bildet das Spritzgusswerkzeug 60 dabei eine Spritzgusskavität 90 aus, die die Düsenwerkzeugkavität 66 und die Aussparung 18 des Entwässerungssiebs 10 umfasst und die an ihrer Unterseite von dem Wasserzeichenrelief 84 des Reliefwerkzeugs 80 begrenzt ist. Bei Einspritzen von Kunststoff in die Spritzgusskavität 90 (Pfeil K) entsteht so zum einen ein direkt in das Entwässerungssieb 10 eingespritzter Wasserzeicheneinsatz 20 mit dem gewünschten Spritzgussrelief 22. Zugleich wird nach dem Schließen des Spritzgussaggregats 60 das Entwässerungssieb 10 durch den Pressdruck und die korrespondierenden Siebprägereliefs 76, 86 von Düsenwerkzeug und Reliefwerkzeug verprägt, wie in Fig. 6(b) ebenfalls dargestellt.

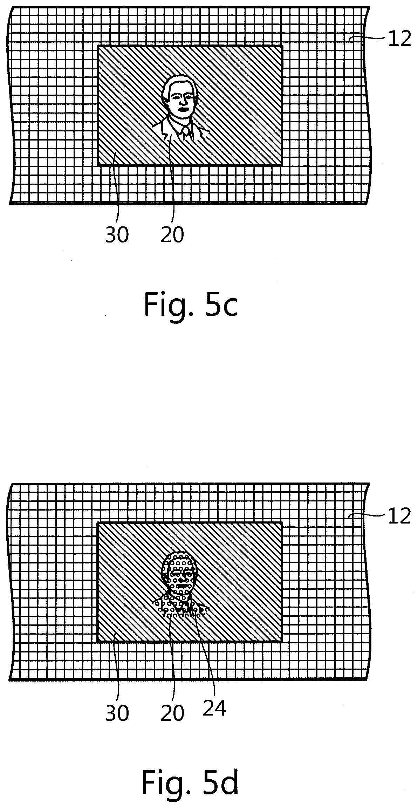

Nach dem Entfernen des Spritzgusswerkzeugs 60 enthält das Entwässerungssieb 10 einen Wasserzeicheneinsatz 20 mit dem gewünschten Relief 22 und einen den Wasserzeicheneinsatz umgebenden Prägebereich 30, wie in Fig. 5(c) gezeigt. Bei alternativer Gestaltung des Spritzgusswerkzeugs und des Reliefwerkzeugs besteht auch die Möglichkeit, ein Entwässerungssieb herzustellen, bei dem ein Prägebereich von einem Wasserzeicheneinsatz mit Relief umgeben ist.

Bei dem hier beispielhaft beschriebenen Spritzgusswerkzeug 60 enthält nur das Düsenwerkzeug 62 eine Düsenwerkzeugkavität 66 zur Erzeugung der Spritzgusskavität 90, während das Reliefwerkzeug 80 keine entsprechende Kavität enthält. In einer anderen Gestaltung kann auch sowohl das Düsenwerkzeug als auch das Reliefwerkzeug jeweils eine Kavität aufweisen, welche als Düsenwerkzeugkavität und Reliefwerkzeugkavität zusammen die Spritzgusskavität erzeugen. Bei einer weiteren Gestaltung weist nur das Reliefwerkzeug eine Reliefwerkzeugkavität auf, während das Düsenwerkzeug keine entsprechende Kavität aufweist.

Nach der Erzeugung der Wasserzeicheneinsätze wird die zweite Laservorrichtung 44 an die mit Wasserzeicheneinsätzen 20 versehenen Stellen des Siebgewebes 12 verfahren, und die Wasserzeicheneinsätze werden durch Einwirkung der Laserstrahlung des CO₂-Lasers mit einer Mehrzahl von Entwässerungs-Perforationen 24 versehen, wie in Figuren 1 und 5(d) gezeigt.

Um die Perforationen 24 an den korrekten Stellen des Wasserzeicheneinsatzes 20 erzeugen zu können, können die Wasserzeicheneinsätze 20 mit Positionsmarken versehen werden, die dann zur Steuerung des CO₂-Lasers von einer Kamera erfasst werden. Dadurch kann beispielsweise auch ein möglicher Versatz der Wasserzeicheneinsätze durch einen Siebverzug berücksichtigt und ausgeglichen werden. Die Perforationen können auch in verschiedenen Bereichen der Einsätze mit unterschiedlichen Perforationsmustern erzeugt werden, beispielsweise mit Mustern unterschiedlicher Geometrie (Quadratraster, Sechseckraster und dergleichen) und/oder mit unterschiedlichem Abstand benachbarter Perforationen.

Die unterschiedlichen Perforationsmuster und Abstände der Perforationen können vorteilhafterweise so gewählt werden, dass gezielt unterschiedliche Helligkeiten im Wasserzeichenbereich erzielt werden. Wenig bis eventuell sogar nicht perforierte Stellen erscheinen beispielsweise sehr hell im Vergleich zum übrigen Papier. Die Perforationen können auch so groß ausgestaltet werden, dass das Perforationsmuster im Wasserzeichen für das bloße Auge erkennbar ist. Dies kann genutzt werden, um zusätzliche Unterstrukturen im Wasserzeichenbereich einzufügen.

Die Begriffe Oberteil/Unterteil und Oberseite/Unterseite beziehen sich bei der vorstehenden Beschreibung auf die in den Figuren dargestellte Anordnung von Düsenwerkzeug und Reliefwerkzeug ober- bzw. unterhalb des Entwässerungssiebs und geben somit die relative Orientierung der beschriebenen Elemente an. Selbstverständlich kann das Spritzgusswerkzeug im Rahmen der Erfindung auch in einer anderen Orientierung verwendet werden, beispielsweise in einer vertikal gespiegelten Anordnung, bei der das Düsenwerkzeug unter und das Reliefwerkzeug über dem Entwässerungssieb angeordnet ist.

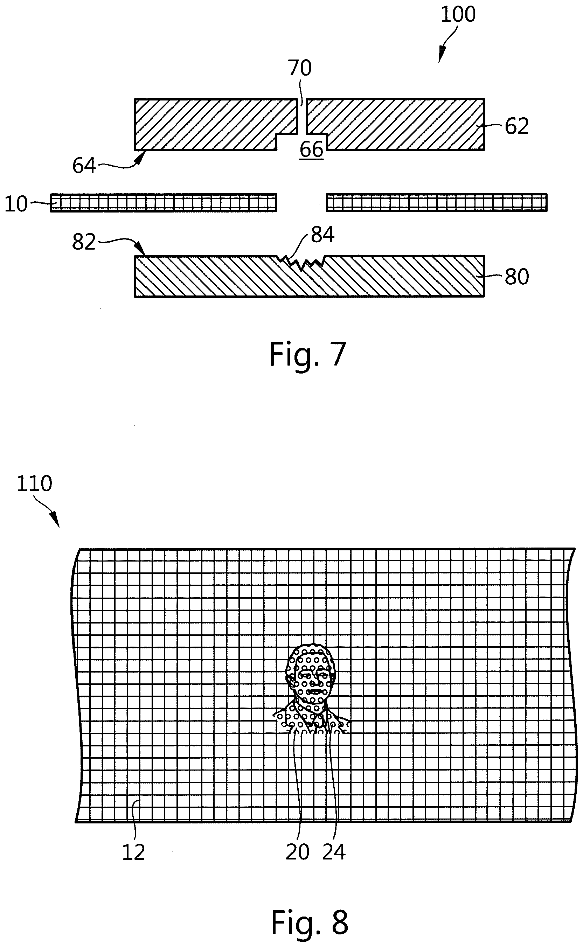

Eine alternative Ausgestaltung eines Spritzgusswerkzeugs 100, das in Fig. 7 gezeigt ist, dient nur der Erzeugung von Wasserzeicheneinsätzen 20, ohne gleichzeitig das Siebgewebe zu prägen. Dies kann beispielsweise bei reinen Kunststoffgeweben sinnvoll sein, die nicht verprägbar sind. Die Erzeugung von Wasserzeicheneinsätzen 20 stellt daher die einzige Möglichkeit dar, mit derartigen Kunststoff-Entwässerungssieben mehrstufige Wasserzeichen im Papier zu erzeugen. Das Spritzgusswerkzeug 100 der Fig. 7 entspricht weitgehend dem Spritzgusswerkzeug 60 der Fig. 6, allerdings weisen im Unterschied zu diesem die Oberseite 82 des Reliefwerkzeugs 80 und die Unterseite 64 des Düsenwerkzeugs 62 keine Reliefstrukturen auf.

Wird in dem oben beschriebenen Verfahren das Spritzgusswerkzeug 100 der Fig. 7 anstelle des Spritzgusswerkzeugs 60 eingesetzt, so erhält man das in Fig. 8 gezeigte Entwässerungssieb 110, das im Bereich der Aussparung im Siebgewebe 12 perforierte 24, spritzgegossene Wasserzeicheneinsätze 20 enthält, das aber keinen diese umgebenden Prägebereich aufweist.

Enthält das Siebgewebe 12 ein Kunststoffgewebe, so kann die Erzeugung der Aussparungen 18 ebenso wie die Perforation der Wasserzeicheneinsätze 20 mit einem CO₂-Laser erfolgen, so dass nur eine Laserquelle für beide Bearbeitungsschritte vorgesehen werden muss.

### Bezugszeichenliste

- 10: Entwässerungssieb
- 12: Siebgewebe
- 14: Kettfäden
- 16: Schussfäden
- 18: Aussparung
- 20: Wasserzeicheneinsatz
- 22: Spritzgussrelief
- 24: Perforationen
- 30: Prägebereich
- 40: Vorrichtung
- 42: Siebbearbeitungsfläche
- 44: erste Laservorrichtung
- 46: Spritzgusswerkzeug
- 48: zweite Laservorrichtung
- 60: Spritzgusswerkzeug
- 62: Düsenwerkzeug
- 64: Unterseite Düsenwerkzeug
- 66: Düsenwerkzeugkavität
- 68: Oberseite Düsenwerkzeug
- 70: Düsenöffnung
- 76: invertiertes Siebprägerelief
- 80: Reliefwerkzeug
- 82: Oberseite Reliefwerkzeug
- 84: Wasserzeichenrelief
- 86: Siebprägerelief
- 90: Spritzgusskavität
- 100: Spritzgusswerkzeug
- 110: Entwässerungssieb

## Patentansprüche

1. Spritzgusswerkzeug (60) zur Erzeugung eines Wasserzeicheneinsatzes (20) mit einem mehrstufigen Spritzgussrelief (22) in einem mit einer Aussparung (18) versehenen Entwässerungssieb (10), mit
- einem Düsenwerkzeug (62), das als Spritzgusswerkzeugoberteil dient, und
- einem Reliefwerkzeug (80), das als Spritzgusswerkzeugunterteil dient, wobei
- das Spritzgusswerkzeug eine Spritzgusskavität (90): aufweist, die durch eine an der Unterseite (64) des Düsenwerkzeugs angeordnete Düsenwerkzeugkavität (66) und/oder eine an der Oberseite (82) des Reliefwerkzeugs angeordnete Reliefwerkzeugkavität erzeugt wird,
- das Düsenwerkzeug an seiner Oberseite (68) eine Düsenöffnung (70) zum Einspritzen von Kunststoff in die Spritzgusskavität aufweist,
- das Reliefwerkzeug an seiner Oberseite mit einem mehrstufigen Wasserzeichenrelief (84) in Form des invertierten Spritzgussreliefs versehen ist,
- das Düsenwerkzeug und das Reliefwerkzeug als Spritzgusswerkzeugoberteil bzw. Spritzgusswerkzeugunterteil das Entwässerungssieb im Bereich der Aussparung (18) zwischen sich aufnehmen und dabei die Spritzgusskavität erzeugen, welche die Düsenwerkzeugkavität und/oder die Reliefwerkzeugkavität und die Aussparung des Entwässerungssiebs enthält und an ihrer Unterseite von dem Wasserzeichenrelief des Reliefwerkzeugs begrenzt ist, so dass beim Einspritzen von Kunststoff in die Spritzgusskavität ein direkt in das Entwässerungssieb eingespritzter Wasserzeicheneinsatz mit dem gewünschten Spritzgussrelief entsteht, wobei
das Reliefwerkzeug an seiner Oberseite angrenzend an das Wasserzeichenrelief ein Siebprägerelief (86) und das Düsenwerkzeug an seiner Unterseite gegebenenfalls angrenzend an die Düsenwerkzeugkavität, ein korrespondierendes invertiertes Siebprägerelief (76) aufweist, so dass die Siebprägereliefs von Düsenwerkzeug und Reliefwerkzeug das Entwässerungssieb angrenzend an den Wasserzeicheneinsatz mit einem Prägebereich (30) versehen.

2. Spritzgusswerkzeug nach Anspruch 1, **dadurch gekennzeichnet, dass** das Wasserzeichenrelief und die Siebprägereliefs ein erstes bzw. zweites Motiv bilden und dass das erste und zweite Motiv aufeinander bezogene oder einander ergänzende Informationen darstellen.

3. Spritzgusswerkzeug nach wenigstens einem der Ansprüche 1 bis 2, **dadurch gekennzeichnet, dass** das Spritzgusswerkzeug eine umlaufende Dichtkante zum Abdichten der Spritzgusskavität aufweist.

4. Vorrichtung zum Ausstatten eines Entwässerungssiebs mit einem Wasserzeicheneinsatz, der ein mehrstufiges Spritzgussrelief trägt, umfassend
- eine Siebbearbeitungsfläche zur Aufnahme eines Entwässerungssiebs,
- eine Laservorrichtung zur Erzeugung von Aussparungen in dem Entwässerungssieb,
- ein Spritzgusswerkzeug nach einem der Ansprüche 1 bis 3 zur Erzeugung eines Wasserzeicheneinsatzes mit einem mehrstufigen Spritzgussrelief in den mit Aussparungen versehenen Bereichen des Entwässerungssiebs, und
- eine Laservorrichtung zur Erzeugung von Entwässerungs-Perforationen in dem Wasserzeicheneinsatz.

5. Vorrichtung nach Anspruch 4, **dadurch gekennzeichnet, dass** die Laservorrichtung zur Erzeugung von Aussparungen in dem Entwässerungssieb einen Nd:YAG-Laser umfasst, und die Laservorrichtung zur Erzeugung von Entwässerungs-Perforationen in dem Wasserzeicheneinsatz einen CO₂-Laser umfasst.

6. Vorrichtung nach Anspruch 4, **dadurch gekennzeichnet, dass** die Vorrichtung eine Laservorrichtung mit einem CO₂-Laser enthält, die sowohl der Erzeugung von Aussparungen in dem Entwässerungssieb als auch der Erzeugung von Entwässerungs-Perforationen in dem Wasserzeicheneinsatz dient.

7. Verfahren zum Ausstatten eines Entwässerungssiebs mit einem Wasserzeicheneinsatz, der ein mehrstufiges Spritzgussrelief trägt, bei dem
- ein Entwässerungssieb bereitgestellt und auf einer Siebbearbeitungsfläche aufgenommen wird,
- durch Einwirkung von Laserstrahlung Aussparungen in dem Entwässerungssieb erzeugt werden,
- mittels eines Spritzgusswerkzeugs nach einem der Ansprüche 1 bis 3 ein Wasserzeicheneinsatz mit einem mehrstufigen Spritzgussrelief in den mit Aussparungen versehenen Bereichen des Entwässerungssiebs erzeugt wird, und
- durch Einwirkung von Laserstrahlung Entwässerungs-Perforationen in dem Wasserzeicheneinsatz erzeugt werden.

8. Verfahren nach Anspruch 7, **dadurch gekennzeichnet, dass** ein Entwässerungssieb mit einem Siebgewebe aus Metall, insbesondere aus Bronze bereitgestellt wird, und dass die Aussparungen in dem Entwässerungssieb durch Einwirkung von Laserstrahlung im nahen Infrarot, vorzugsweise bei einer Wellenlänge von 800 nm bis 1500 nm, besonders bevorzugt durch Einwirkung der Laserstrahlung eines Nd:YAG-Lasers erzeugt werden.

9. Verfahren nach Anspruch 7, **dadurch gekennzeichnet, dass** ein Entwässerungssieb mit einem Siebgewebe aus Kunststoff bereitgestellt wird, und dass die Aussparungen in dem Entwässerungssieb durch Einwirkung von Laserstrahlung im mittleren Infrarot, vorzugsweise bei einer Wellenlänge von 5 µm bis 20 µm, besonders bevorzugt durch Einwirkung der Laserstrahlung eines CO₂-Lasers erzeugt werden.

10. Verfahren nach Anspruch 7 oder 8, **dadurch gekennzeichnet, dass** mittels eines Spritzgusswerkzeugs nach Anspruch 1 sowohl ein Wasserzeicheneinsatz mit einem mehrstufigen Spritzgussrelief in den mit Aussparungen versehenen Bereichen des Entwässerungssiebs erzeugt wird als auch ein an den Wasserzeicheneinsatz angrenzender Prägebereich erzeugt wird.

11. Verfahren nach wenigstens einem der Ansprüche 7 bis 10, **dadurch gekennzeichnet, dass** die Entwässerungs-Perforationen in dem Wasserzeicheneinsatz durch Einwirkung von Laserstrahlung im mittleren Infrarot, vorzugsweise bei einer Wellenlänge von 5 µm bis 20 µm, besonders bevorzugt durch Einwirkung der Laserstrahlung eines CO₂-Lasers erzeugt werden.

## Claims

1. An injection mold for producing a watermark insert having a multilevel injection molded relief in a dewatering screen provided with a gap, having
- a nozzle tool that serves as an injection mold top, and
- a relief tool that serves as an injection mold bottom,
- the injection mold comprising an injection molding cavity that is produced by a nozzle tool cavity arranged on the bottom of the nozzle tool and/or a relief tool cavity arranged on the top of the relief tool,
- the nozzle tool comprising, on its top, a nozzle opening for injecting plastic into the injection molding cavity,
- the relief tool being provided on its top with a multilevel watermark relief in the form of the inverted injection molded relief,
- the nozzle tool and the relief tool as the injection mold top and injection mold bottom taking up the dewatering screen in the region of the gap between them, thus producing the injection molding cavity, which includes the nozzle tool cavity and/or the relief tool cavity and the gap in the dewatering screen and on its bottom is delimited from the watermark relief of the relief tool such that a watermark insert injected directly into the dewatering screen and having the desired injection molded relief is created when plastic is injected into the injection molding cavity,
the relief tool comprising, on its top and adjacent to the watermark relief, a screen-embossing relief, and the nozzle tool on its bottom and, if appropriate, adjacent to the nozzle tool cavity, a corresponding inverted screen-embossing relief, such that the screen-embossing reliefs of the nozzle tool and the relief tool furnish the dewatering screen with an embossing region adjacent to the watermark insert.

2. The injection mold according to claim 1, **characterized in that** the watermark relief and the screen-embossing reliefs form a first or second motif, and **in that** the first and second motif constitute pieces of information that are related to or complement one another.

3. The injection mold according to at least one of claims 1 to 2, **characterized in that** the injection mold comprises a circumferential sealing edge for sealing the injection molding cavity.

4. A device for furnishing a dewatering screen with a watermark insert that bears a multilevel injection molded relief, comprising
- a screen working surface for taking up a dewatering screen,
- a laser device for producing gaps in the dewatering screen,
- an injection mold according to one of claims 1 to 3 for producing, in the dewatering screen regions provided with gaps, a watermark insert having a multilevel injection molded relief, and
- a laser device for producing dewatering perforations in the watermark insert.

5. The device according to claim 4, **characterized in that** the laser device for producing gaps in the dewatering screen comprises a Nd:YAG laser, and the laser device for producing dewatering perforations in the watermark insert comprises a CO₂ laser.

6. The device according to claim 4, **characterized in that** the device includes a laser device having a CO₂ laser that serves both to produce gaps in the dewatering screen and to produce dewatering perforations in the watermark insert.

7. A method for furnishing a dewatering screen with a watermark insert that bears a multilevel injection molded relief, in which
- a dewatering screen is provided and is taken up on a screen working surface,
- gaps are produced in the dewatering screen by the action of laser radiation,
- by means of an injection mold according to one of claims 1 to 3, a watermark insert having a multilevel injection molded relief is produced in the dewatering screen regions provided with gaps, and
- dewatering perforations are produced in the watermark insert by the action of laser radiation.

8. The method according to claim 7, **characterized in that** a dewatering screen having a screen fabric composed of metal, especially of bronze is provided, and **in that** the gaps in the dewatering screen are produced by the action of laser radiation in the near infrared, preferably at a wavelength of 800 nm to 1500 nm, particularly preferably by the action of the laser radiation of a Nd:YAG laser.

9. The method according to claim 7, **characterized in that** a dewatering screen having a screen fabric composed of plastic is provided, and **in that** the gaps in the dewatering screen are produced by the action of laser radiation in the mid-infrared, preferably at a wavelength of 5 µm to 20 µm, particularly preferably by the action of the laser radiation of a CO₂ laser.

10. The method according to claim 7 or 8, **characterized in that,** by means of an injection mold according to claim 1, both a watermark insert having a multilevel injection molded relief is produced in the dewatering screen regions provided with gaps, and an embossing region adjacent to the watermark insert is produced.

11. The method according to at least one of claims 7 to 10, **characterized in that** the dewatering perforations in the watermark insert are produced by the action of laser radiation in the mid-infrared, preferably at a wavelength of 5 µm to 20 µm, particularly preferably by the action of the laser radiation of a CO₂ laser.

## Revendications

1. Outil de moulage par injection, destiné à créer un insert en filigrane pourvu d'un relief moulé par injection sur plusieurs niveaux dans un tamis d'égouttage muni d'une encoche, comportant
- un outil à buse, qui fait office de partie supérieure d'outil de moulage par injection et
- un outil d'embossage, qui fait office de partie inférieure d'outil de moulage par injection,
- l'outil de moulage par injection comportant une cavité de moulage par injection qui est créée par une cavité d'outil à buse placée sur la face inférieure de l'outil à buse et/ou par une cavité d'outil d'embossage placée sur la face supérieure de l'outil d'embossage,
- l'outil à buse comportant sur sa face supérieure un orifice de buse, destiné à injecter de la matière plastique dans la cavité de moulage par injection,
- l'outil d'embossage étant muni sur sa face supérieure d'un relief en filigrane sur plusieurs niveaux, sous la forme du relief de moulage par injection inversé,
- au titre de partie supérieure de l'outil de moulage par injection ou de partie inférieure de l'outil de moulage par injection, l'outil à buse et l'outil d'embossage recevant entre eux le tamis d'égouttage dans la région de l'encoche et créant à cet effet la cavité de moulage par injection laquelle contient la cavité d'outil à buse et/ou la cavité d'outil d'embossage et l'encoche du tamis d'égouttage et sur sa face inférieure est délimitée par le relief en filigrane de l'outil d'embossage, de sorte que lors de l'injection de matière plastique dans la cavité de moulage par injection, un insert en filigrane directement injecté dans le tamis d'égouttage prenne naissance, avec le relief moulé par injection souhaité
- sur sa face supérieure, l'outil d'embossage comportant un relief de gaufrage de tamis, adjacent au relief en filigrane et sur sa face inférieure, l'outil à buse comportant un relief de gaufrage de tamis inversé correspondant, adjacent le cas échéant à la cavité d'outil à buse, de sorte que les reliefs de gaufrage de tamis de l'outil à buse et de l'outil d'embossage munissent le tamis d'égouttage d'une zone de gaufrage, adjacente à l'insert en filigrane.

2. Outil de moulage par injection selon la revendication 1, **caractérisé en ce que** le relief en filigrane et les reliefs de gaufrage de tamis forment un premier ou un deuxième motif et **en ce que** le premier et le deuxième motifs représentent des informations se rapportant les unes aux autres ou se complétant.

3. Outil de moulage par injection selon au moins l'une quelconque des revendications 1 et 2, **caractérisé en ce que** l'outil de moulage par injection comporte une arête d'étanchéité périphérique, pour assurer l'étanchéité de la cavité de moulage par injection.

4. Dispositif, destiné à équiper un tamis d'égouttage d'un insert en filigrane, qui porte un relief moulé par injection sur plusieurs niveaux, comprenant :
- une surface d'usinage de tamis, destinée à recevoir un tamis d'égouttage,
- un dispositif au laser, destiné à créer des encoches dans le tamis d'égouttage,
- un outil de moulage par injection selon l'une quelconque des revendications 1 à 3, destiné à créer un insert en filigrane pourvu d'un relief moulé par injection sur plusieurs niveaux, dans les régions munies d'encoches du tamis d'égouttage et
- un dispositif au laser destiné à créer des perforations d'égouttage dans l'insert en filigrane.

5. Dispositif selon la revendication 4, **caractérisé en ce que** pour créer des encoches dans le tamis d'égouttage, le dispositif au laser comprend un laser Nd:YAG et pour créer des perforations d'égouttage dans l'insert en filigrane, le dispositif au laser comprend un laser CO₂.

6. Dispositif selon la revendication 4, **caractérisé en ce que** le dispositif contient un dispositif au laser pourvu d'un laser CO₂ qui sert aussi bien à créer des encoches dans le tamis d'égouttage qu'également à créer des perforations d'égouttage dans l'insert en filigrane.

7. Procédé, destiné à équiper un tamis d'égouttage d'un insert en filigrane, qui porte un relief moulé par injection sur plusieurs niveaux, lors duquel
- un tamis d'égouttage est mis à disposition et réceptionné sur une surface d'usinage de tamis,
- par effet d'un faisceau laser, des encoches sont créées dans le tamis d'égouttage,
- au moyen d'un outil de moulage par injection selon l'une quelconque des revendications 1 à 3, un insert en filigrane pourvu d'un relief moulé par injection sur plusieurs niveaux est créé dans les régions munies d'encoches du tamis d'égouttage, et
- par effet d'un faisceau laser, des perforations d'égouttage sont créées dans l'insert en filigrane.

8. Procédé selon la revendication 7, **caractérisé en ce qu'**il est mis à disposition un tamis d'égouttage pourvu d'un textile de tamisage métallique, notamment en bronze et **en ce que** les encoches dans le tamis d'égouttage sont créées par l'effet d'un faisceau laser dans les infra-rouges proches, de préférence à une longueur d'onde de 800 nm à 1500 nm, de manière particulièrement préférentielle, par l'effet du faisceau laser d'un laser Nd:YAG.

9. Procédé selon la revendication 7, **caractérisé en ce qu'**il est mis à disposition un tamis d'égouttage pourvu d'un textile de tamisage en matière plastique, et que les encoches dans le tamis d'égouttage sont créées par l'effet d'un faisceau laser dans les infra-rouges moyens, de préférence à une longueur d'onde de 5 µm à 20 µm, de manière particulièrement préférentielle, par l'effet du faisceau laser d'un laser CO₂.

10. Procédé selon la revendication 7 ou 8, **caractérisé en ce qu'**au moyen d'un outil de moulage par injection selon la revendication 1, on créé aussi bien un insert en filigrane pourvu d'un relief moulé par injection sur plusieurs niveaux dans les régions munies d'encoches du tamis d'égouttage, qu'également une zone gaufrée adjacente à l'insert en filigrane.

11. Procédé selon au moins l'une quelconque des revendications 7 à 10, **caractérisé en ce que** les perforations d'égouttage sont créées dans l'insert en filigrane par l'effet d'un faisceau laser dans les infra-rouges moyens, de préférence à une longueur d'onde de 5 µm à 20 µm, de manière particulièrement préférentielle, par l'effet du faisceau laser d'un laser CO₂.
